# EUROPEAN PATENT APPLICATION

(11) **EP 4 601 252 A1**
(43) Date of publication of application: **13.08.2025**
(21) Application number: 22961251.0
(22) Date of filing: 08.10.2022
(51) Int. Cl.: H04L 27/00

(54) **METHODS FOR DETERMINING PREPARATION TIME FOR UPLINK ANTENNA SWITCHING, AND APPARATUSES**

(71) Applicant: Beijing Xiaomi Mobile Software Co., Ltd., Beijing 100085 (CN)
(72) Inventor: GUO, Shengxiang, Beijing 100085 (CN); WANG, Lei, Beijing 100085 (CN)
(74) Representative: Stöckeler, Ferdinand
(86) International application number: PCT/CN2022/123875
(87) International publication number: WO 2024/073894

(57) **Abstract**

Disclosed in the embodiments of the present disclosure are methods for determining a preparation time for uplink antenna switching, and apparatuses, which methods and apparatuses can be applied to the technical field of communications. A method for determining a preparation time for uplink antenna switching, which method is executed by a terminal device, comprises: determining a preparation time required for the terminal device to perform uplink antenna switching, wherein the preparation time comprises a first time for preparation and/or a second time for antenna switching. Therefore, determining a preparation time required for a terminal device to perform uplink antenna switching is supported, so as to ensure the communication quality.

## Description

### TECHNICAL FIELD

The present disclosure relates to the field of communication technology, and specifically to a method and a device for determining preparation time for uplink (UL) antenna switching.

### BACKGROUND

A terminal supports uplink (UL) antenna switching and dynamic switching between a plurality of frequency bands. However, terminals with different capabilities require different preparation time when performing the UL antenna switching.

In the related art, it is not supported to determine preparation time required by the terminal for the UL antenna switching, which is an urgent problem to be solved.

### SUMMARY

Embodiments of the present disclosure provide a method and a device for determining preparation time for uplink (UL) antenna switching, which supports to determine the preparation time required by a terminal for the UL antenna switching so as to ensure good communication quality.

According to a first aspect, an embodiment of the present disclosure provides a method for determining preparation time for UL antenna switching, performed by a terminal, including: determining preparation time required by the terminal for UL antenna switching, in which the preparation time includes first time for preparation and/or second time for antenna switching.

In this technical solution, the terminal determines the preparation time required by the terminal for the UL antenna switching, in which the preparation time includes the first time for the preparation and/or the second time for the antenna switching. Therefore, it is supported to determine the preparation time required by the terminal for the UL antenna switching so as to ensure the communication quality.

According to a second aspect, an embodiment of the present disclosure provides another method for determining preparation time for UL antenna switching, performed by a network device, including: determining preparation time required by the terminal for UL antenna switching, in which the preparation time includes first time for preparation and/or second time for antenna switching.

According to a third aspect, an embodiment of the present disclosure provides a communication device. The communication device has some or all of functions of the terminal in the method as described in above first aspect. For example, functions of the communication device may have some or all of functions in embodiments of the present disclosure, or may have functions of implementing any one of embodiments of the present disclosure independently. The functions may be realized by hardware, or by executing corresponding software by hardware. The hardware or software includes one or more units or modules corresponding to the above functions.

In an implementation, a structure of the communication device may include a transceiver module and a processing module, in which the processing module is configured to support the communication device to perform corresponding functions in above method, and the transceiver module is configured to support communication between the communication device and other devices. The communication device may also include a storage module for coupling with the transceiver module and the processing module, in which the storage module stores a computer program and data necessary for the communication device.

In an implementation, the communication device includes: a processing module, configured to determine preparation time required by the terminal for UL antenna switching, in which the preparation time includes first time for preparation and/or second time for antenna switching.

According to a fourth aspect, an embodiment of the present disclosure provides another communication device. The communication device has some or all of functions of the network device in the method as described in above second aspect. For example, functions of the communication device may have some or all of functions in embodiments of the present disclosure, or may have functions of implementing any one of embodiments of the present disclosure independently. The functions may be realized by hardware, or by executing corresponding software by hardware. The hardware or software includes one or more units or modules corresponding to the above functions.

In an implementation, a structure of the communication device may include a transceiver module and a processing module, in which the processing module is configured to support the communication device to perform corresponding functions in above method, and the transceiver module is configured to support communication between the communication device and other devices. The communication device may also include a storage module for coupling with the transceiver module and the processing module, in which the storage module stores a computer program and data necessary for the communication device.

In an implementation, the communication device includes: a processing module, configured to determine preparation time required by the terminal for UL antenna switching, in which the preparation time includes first time for preparation and/or second time for antenna switching.

According to a fifth aspect, an embodiment of the present disclosure provides a communication device. The communication device includes a processor. When a computer program in a memory is called by the processor, the method as described in the above first aspect is implemented.

According to a sixth aspect, an embodiment of the present disclosure provides a communication device. The communication device includes a processor. When a computer program in a memory is called by the processor, the method as described in the above second aspect is implemented.

According to a seventh aspect, an embodiment of the present disclosure provides a communication device. The communication device includes a processor and a memory for storing a computer program. When the computer program stored in the memory is executed by the processor, the communication device is caused to implement the method in the above first aspect.

According to an eighth aspect, an embodiment of the present disclosure provides a communication device. The communication device includes a processor and a memory for storing a computer program. When the computer program stored in the memory is executed by the processor, the communication device is caused to implement the method in the above second aspect.

According to a ninth aspect, an embodiment of the present disclosure provides a communication device. The communication device includes a processor and an interface circuit, in which the interface circuit is configured to receive code instructions and transmit the code instructions to the processor; and the processor is configured to run the code instructions to cause the communication device to implement the method in the above first aspect.

According to a tenth aspect, an embodiment of the present disclosure provides a communication device. The communication device includes a processor and an interface circuit, in which the interface circuit is configured to receive code instructions and transmit the code instructions to the processor; and the processor is configured to run the code instructions to cause the communication device to implement the method in the above second aspect.

According to an eleventh aspect, an embodiment of the present disclosure provides a system for determining preparation time for UL antenna switching. The system includes the communication device in the third aspect and the communication device in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect, an embodiment of the present disclosure provides a computer readable storage medium. The storage medium stores instructions used by the above terminal. When the instructions are executed, the terminal is caused to implement the method in the above first aspect.

According to a thirteenth aspect, an embodiment of the present disclosure provides a readable storage medium. The storage medium stores instructions used by the above network device. When the instructions are executed, the network device is caused to implement the method in the above second aspect.

According to a fourteenth aspect, an embodiment of the present disclosure provides a computer program product including a computer program. When the computer program is running on a computer, the computer is caused to implement the method in the above first aspect.

According to a fifteenth aspect, an embodiment of the present disclosure provides a computer program product including a computer program. When the computer program is running on a computer, the computer is caused to implement the method in the above second aspect.

According to a sixteenth aspect, an embodiment of the present disclosure provides a chip system. The chip system includes at least one processor and at least one interface, configured to support the terminal to perform functions as described in the first aspect, for example, to determine or process at least one of data and information in above methods. In a possible design, the chip system also includes a memory for saving a computer program and data necessary for the terminal. The chip system may include a chip, or a chip and other discrete devices.

According to a seventeenth aspect, an embodiment of the present disclosure provides a chip system. The chip system includes at least one processor and at least one interface, configured to support the network device to perform functions as described in the second aspect, for example, to determine or process at least one of data and information in above methods. In a possible design, the chip system also includes a memory for saving a computer program and data necessary for the network device. The chip system may include a chip, or a chip and other discrete devices.

According to an eighteenth aspect, an embodiment of the present disclosure provides a computer program. When the computer program is running on a computer, the computer is caused to implement the method in the above first aspect.

According to a nineteenth aspect, an embodiment of the present disclosure provides a computer program. When the computer program is running on a computer, the computer is caused to implement the method in the above second aspect.

### BRIEF DESCRIPTION OF THE DRAWINGS

In order to more clearly illustrate the technical solution in embodiments of the disclosure or the background, the accompanying drawings to be used in embodiments of the disclosure or the background will be described below.
FIG. 1 is a schematic diagram of an architecture of a communication system according to an embodiment of the present disclosure.
FIG. 2 is a flowchart of a method for determining preparation time for uplink (UL) antenna switching according to an embodiment of the present disclosure.
FIG. 3 is a flowchart of another method for determining preparation time for uplink (UL) antenna switching according to an embodiment of the present disclosure.
FIG. 4 is a flowchart of another method for determining preparation time for uplink (UL) antenna switching according to an embodiment of the present disclosure.
FIG. 5 is a flowchart of another method for determining preparation time for uplink (UL) antenna switching according to an embodiment of the present disclosure.
FIG. 6 is a flowchart of another method for determining preparation time for uplink (UL) antenna switching according to an embodiment of the present disclosure.
FIG. 7 is a flowchart of another method for determining preparation time for uplink (UL) antenna switching according to an embodiment of the present disclosure.
FIG. 8 is a flowchart of another method for determining preparation time for uplink (UL) antenna switching according to an embodiment of the present disclosure.
FIG. 9 is a flowchart of another method for determining preparation time for uplink (UL) antenna switching according to an embodiment of the present disclosure.
FIG. 10 is a block diagram of a communication device according to an embodiment of the present disclosure.
FIG. 11 is a block diagram of another communication device according to an embodiment of the present disclosure.
FIG. 12 is a block diagram of a chip according to an embodiment of the present disclosure.

### DETAILED DESCRIPTION

In order to better understand a method and a device for determining preparation time for uplink (UL) antenna switching in embodiments of the present disclosure, a communication system applicable to the embodiments of the present disclosure is described below.

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of devices and methods consistent with aspects related to the present disclosure as recited in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "while", or "in response to determining...".

It needs to be noted that information (including but not limited to user equipment information, user personal information, etc.), data (including but not limited to data used for analysis, data stored, data displayed, etc.) and a signal involved in the present disclosure are authorized by a user or fully authorized by all parties. Collection, usage and processing of relevant data shall comply with relevant laws, regulations and standards of relevant countries and regions.

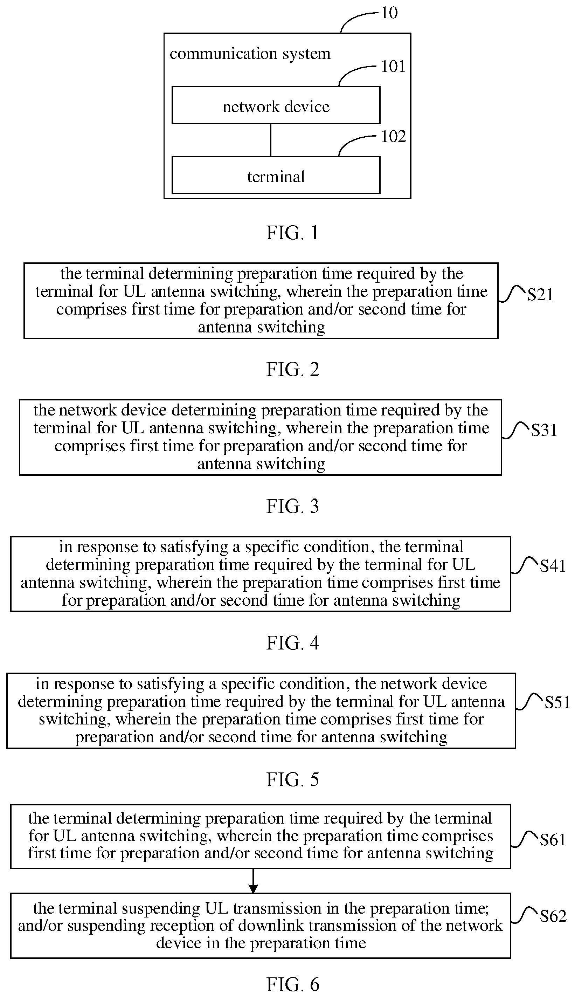

Referring to FIG. 1, FIG. 1 is a schematic diagram of an architecture of a communication system according to an embodiment of the present disclosure. The communication system may include, but is not limited to, one network device and one terminal. The number and form of devices in the FIG. 1 are only shown as an example, and do not constitute a limitation on embodiments of the present disclosure. The communication system may include two or more network devices and two or more terminals in a practical application. The communication system in the FIG. 1 including one network device 101 and one terminal 102 is shown as an example.

It needs to be noted that the technical solution of embodiments of the present disclosure may be applied to various communication systems, for example, a long term evolution (LTE) system, a 5th generation (5G) mobile communication system, a 5G new radio (NR) system, or other new mobile communication systems in the future. It also needs to be noted that a sidelink in embodiments of the present disclosure may also be called as a side link or a direct link.

The network device 101 in embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless fidelity (WiFi) system. The embodiments of the present disclosure do not limit a specific technology and a specific device form used by the network device. The network device according to embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal 102 in embodiments of the present disclosure is an entity on the user side for receiving or sending signals, such as a mobile phone. The terminal may also be called a terminal, a user equipment (UE), a mobile station (MS), a mobile terminal (MT), etc. The terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit a specific technology and a specific device form used by the terminal.

It may be understood that the communication system in embodiments of the present disclosure is to more clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the present disclosure is also applicable to similar technical problems.

In addition, following points are made to facilitate understanding of embodiments of the present disclosure.

First, in embodiments of the present disclosure, "indicate" may include both "directly indicate" and "indirectly indicate". "A piece of information indicates A" may include that the information directly indicates A or indirectly indicates A, but does not mean that the information necessarily carries A.

Information indicated by the information is called information to be indicated. In a specific implementation process, there are many ways to indicate the information to be indicated, including but not limited to, directly indicating the information to be indicated, such as the information to be indicated itself or an index of the information to be indicated; or indirectly indicating the information to be indicated by indicating other information, in which there is a relationship between other information and the information to be indicated. It is also possible to indicate only part of the information to be indicated, while other parts of the information to be indicated are known or agreed in advance. For example, indication of specific information may also be realized by means of a pre-agreed (such as by a protocol) order of all pieces of information, so as to reduce indication overhead to a certain extent.

The information to be indicated may be sent as a whole, or may be sent separately after being divided into a plurality of pieces of sub-information. Sending periods and/or sending occasions of the plurality of pieces of sub- information may be the same or different. A specific sending method is not limited in the present disclosure. The sending periods and/or the sending occasion of these plurality of pieces of sub- information may be predefined, for example, by a protocol.

Second, terms "first", "second", and various numerical numbers in the present disclosure (e.g., "#1", "#2") are used only for a convenient distinction and are not used to limit a scope of embodiments of the present disclosure, such as for distinguishing different signaling and different information.

Third, in the present disclosure, "preset" may include either indicated by signaling of the network device, or predefined, for example, by a protocol. The "predefined" may be achieved by pre-storing a corresponding code, a table or other means that may be used to indicate relevant information in a device (for example, a terminal and a network device), and a specific implementation is not limited in embodiments of the present disclosure.

Fourth, the "protocol" in embodiments of the present disclosure may refer to a standard specification in a field of communication, such as a LTE specification, an NR specification, a WLAN specification, and other related specifications in the communication system, which is not limited in embodiments of the present disclosure.

Fifth, embodiments of the present disclosure list several implementations to clearly illustrate the technical solution of embodiments of the present disclosure. Of course, those skilled in the art may understand that the plurality of embodiments provided by embodiments of the present disclosure may be executed independently or in combination with methods of other embodiments in the present disclosure, or independently or in combination with some methods in other related arts, which is not limited in embodiments of the present disclosure.

In the related art, based on a work item description (WID) of RAN#96, super uplink (UL) requires a further support for an UL antenna (UL Tx) switching case with up to 3 or 4 bands and limits simultaneous transmission of up to 2 bands. In a relevant discussion of UL Tx switching, a way to achieve a latest wireless access (WA) is a method for supporting Alt.1 antenna switching, that is, the terminal supports all configured switching cases and switching between any bands is not restricted.

If a dynamic switching mechanism of more than two bands is supported, the terminal needs to support memory update/storage of more bands to meet switching of other bands other than the 2 bands in the baseline. For example, when case#1(1P+0P+0P+0P) switches with case#2(0P+0P+1P+0P), switched bands are band#1 and band#3. When the terminal is configured to support only 1&3 band pair switching, the terminal only needs to maintain memories of band#1 and band#3. If the terminal is configured to support the 1&3 band pair switching and 1&2 band pair switching at the same time, switching between case#1(1P+0P+0P+0P) and case#4(0P+1P+0P+0P) may also be performed. In addition to the memories of band#1 and band#3, the terminal may further maintain a memory of band#2. If a maintenance case in R16/17 is still used, that is, the memories of two bands are maintained, the memories are no longer bound to the bands, and it is needed to switch to a third band and a fourth band, which also increases complexity of the terminal.

In the related art, a working assumption is proposed below.

-If Rel-18 UL Tx switching is supported, following switching mechanism is considered as baseline for the Rel-18 UL Tx switching across 3 or 4 bands.

Alt.1: Dynamic Tx carrier switching may be across all the switching cases supported by the UE and based on the UL scheduling, i.e., via dynamic grant and/or radio resource control (RRC) configuration for UL transmission.

-RAN1 may support one or more of following complexity reduction options, considering at least the potential additional preparation time, additional interruption time, and radio frequency (RF) complexity for certain switching cases/patterns, if Rel-18 UL Tx switching is supported based on Alt.1, and companies are encouraged to investigate options with striving for down-selection at RAN1#110bis-e.

Option 1: UE is allowed to support only some of concurrent UL cases (band pairs);
FFS (for further study): at least one band pair should be supported as in Rel-17).
FFS: for both 3 and 4 bands cases or only for 4 bands case.
FFS: potential capability/RRC signaling.

Option 2: UE is allowed to support 2 ports transmission only on some of bands out of configured bands for UL Tx switching.

FFS: at least two bands should support up to 2 Tx as in Rel-17.

FFS: for both 3 and 4 bands cases or only for 4 bands case.

FFS: for both switched UL and dual UL cases or only for dual UL case.

FFS: whether/how to reuse or extend existing capability/RRC signaling.

Option 3: UE is allowed with more preparation procedure time (or interruption time) only for some specific switching cases/patterns.

FFS: specific switching cases/patterns where more preparation procedure time (or interruption time) is necessary, e.g., switching patterns not existed in Rel-17.

FFS: how long preparation procedure time and/or interruption time is necessary, and whether RAN4 involvement is necessary.

FFS: whether/how to report/indicate the specific switching cases/patterns and/or value(s) of preparation procedure time (or interruption time).

FFS: what is the definition of preparation procedure time or interruption time, including whether interruption happens during the preparation procedure time and whether it includes switching period.

FFS: whether/how long minimum interval between two succeeding UL Tx switching is necessary.

Option 4: UE is allowed to support only some of band pairs for Tx switching
FFS: at least one band pair should be supported as in Rel-17.
FFS: for both 3 and 4 bands cases or only for 4 bands case.
FFS: for switched UL and/or dual UL.
FFS: potential capability/RRC signaling.

Other options are not precluded.

In the related art, it is not supported to determine the preparation time required by the terminal for the UL antenna switching.

Based on this, embodiments of the present disclosure provide a method and a device for determining preparation time for UL antenna switching so as to support to determine the preparation time required by the terminal for the UL antenna switching.

A method and a device for determining preparation time for UL antenna switching in the present disclosure are described in detail in combination with the attached drawings.

Referring to FIG. 2, FIG. 2 is a flowchart of a method for determining preparation time for UL antenna switching according to an embodiment of the present disclosure.

As shown in FIG. 2, the method is performed by a terminal. The method may include, but is not limited to S21.

At S21, the terminal determines preparation time required by the terminal for UL antenna switching, in which the preparation time includes first time for preparation and/or second time for antenna switching.

In embodiments of the present disclosure, the terminal may determine the preparation time required by the terminal for the UL antenna switching based on an implementation, or based on agreement of a protocol, or based on configuration of a network device.

In some embodiments, the terminal receives indication information sent by the network device, in which the indication information indicates the preparation time required by the terminal for the UL antenna switching, or a parameter or identifier of the preparation time required by the terminal for the UL antenna switching; and the terminal determines the preparation time according to the indication information.

In embodiments of the present disclosure, the terminal may receive the indication information sent by the network device, in which the indication information indicates the preparation time required by the terminal for the UL antenna switching, or the parameter or the identifier of the preparation time required by the terminal for the UL antenna switching; and based on this, the terminal may determine the preparation time according to the indication information in case that the terminal receives the indication information sent by the network device. In this way, the network device and the terminal may have the same understanding on the preparation time required by the terminal for the UL antenna switching so as to ensure good communication quality.

In some embodiments, the terminal receiving the indication information sent by the network device includes at least one of:
receiving semi-static signaling sent by the network device;
receiving a media access control control element (MAC CE) sent by the network device; or
receiving downlink control information (DCI) sent by the network device.

In embodiments of the present disclosure, the terminal receiving the indication information sent by the network device may refer to receiving the semi-static signaling sent by the network device, in which the semi-static signaling refers to RRC signaling, and the RRC signaling includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

In embodiments of the present disclosure, the terminal receiving the indication information sent by the network device may refer to receiving the MAC CE sent by the network device, in which the MAC CE includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

In embodiments of the present disclosure, the terminal receiving the indication information sent by the network device may refer to receiving the DCI sent by the network device, in which the DCI includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

The preparation time may include the first time for preparation. For example, the preparation time includes a time period from when the terminal determines that the UL antenna switching is required to when the UL antenna switching is actually performed. For example, the preparation time includes time required for the terminal to make a preparation work for accurately performing the UL antenna switching. The preparation work may include, for example, any one or a plurality of: memory update, memory determination, memory refreshing, uplink/downlink transmission arrangement, and so on.

The preparation time may include the second time for antenna switching. For example, the preparation time includes time from beginning of the UL antenna switching to completion of the UL antenna switching on the terminal.

The preparation time may include the first time for the preparation and/or the second time for antenna switching. For example, the preparation time includes a time period from when the terminal determines that the UL antenna switching is required to when the UL antenna switching is actually completed.

In some embodiments, the preparation time includes at least one of:
time required for the terminal to refresh a memory unit;
time required for the terminal to load a memory unit;
time in which the terminal interrupts all ongoing transmissions; or
time in which the network device suspends scheduling for the terminal.

In embodiments of the present disclosure, the preparation time may include the time required for the terminal to refresh the memory unit. It may be understood that in case that the preparation time includes the first time for the preparation and/or the second time for antenna switching and the preparation time includes the time required for the terminal to refresh the memory unit, the first time may include the time required for the terminal to refresh the memory unit.

In embodiments of the present disclosure, the preparation time may include the time required for the terminal to load the memory unit. It may be understood that in case that the preparation time includes the first time for the preparation and/or the second time for antenna switching and the preparation time includes the time required for the terminal to load the memory unit, the first time may include the time required for the terminal to load the memory unit.

In embodiments of the present disclosure, the preparation time may include the time in which the terminal interrupts all ongoing transmissions. It may be understood that in case that the preparation time includes the first time for the preparation and/or the second time for antenna switching and the preparation time includes the time in which the terminal interrupts all ongoing transmissions, the first time may include the time in which the terminal interrupts all ongoing transmissions.

In embodiments of the present disclosure, the preparation time may include the time in which the network device suspends the scheduling for the terminal. It may be understood that in case that the preparation time includes the first time for the preparation and/or the second time for antenna switching and the preparation time includes the time in which the network device suspends the scheduling for the terminal, the first time may include the time in which the network device suspends the scheduling for the terminal.

The preparation time may include one or a plurality of above parameters, so the above parameters may be used together in any way, which is not described in detail here.

It may be understood that the network device and the terminal need to have the same understanding on the preparation time required by the terminal for the UL antenna switching so as to ensure good communication quality.

Based on this, the terminal may report the preparation time to the network device when determining the preparation time required by the terminal for the UL antenna switching.

In some embodiments, the terminal reports the preparation time to the network device.

In embodiments of the present disclosure, the terminal may report the preparation time to the network device when the preparation time required by the terminal for the UL antenna switching is determined. In this way, the network device and the terminal may have the same understanding on the preparation time required by the terminal for the UL antenna switching so as to ensure good communication quality.

In some embodiments, the terminal reporting the preparation time to the network device includes:
reporting capability information to the network device, in which the capability information includes the preparation time; or
sending first signaling to the network device, in which the first signaling includes the preparation time.

In embodiments of the present disclosure, the terminal reports the preparation time to the network device, in which the capability information includes the preparation time. In this way, the network device and the terminal may have the same understanding on the preparation time required by the terminal for the UL antenna switching so as to ensure good communication quality.

In embodiments of the present disclosure, the terminal reports the first signaling to the network device, in which the first signaling includes the preparation time. In this way, the network device and the terminal may have the same understanding on the preparation time required by the terminal for the UL antenna switching so as to ensure good communication quality.

In some embodiments, the terminal reporting the capability information to the network device in a certain form, including:
reporting the capability information to the network device, in which the capability information is reported in a form of a frequency band group, that is, a piece of or a group of the capability information is reported for each frequency band group. The frequency band combination includes at least two frequency bands. For example, a first band group includes two bands: a first band and a second band. For another example, a second band group includes three bands: the first band, the second band and a third band; or
reporting the capability information to the network device, in which the capability information is reported in a form of a frequency band, that is, a piece of or a group of the capability information is reported for each frequency band.

In embodiments of the present disclosure, the terminal reports the capability information to the network device, in which the capability information includes the preparation time. In this way, the network device and the terminal may have the same understanding on the preparation time required by the terminal for the UL antenna switching so as to ensure good communication quality.

In embodiments of the present disclosure, the terminal reports the capability information to the network device, in which the capability information includes first UL frequency band information and second UL frequency band information. The first UL frequency band information, such as switchedUL information, indicates that only one band may be transmitted per band transmission. The second UL frequency band information, such as dualUL information, indicates that band transmission may be performed in two bands simultaneously.

In some embodiments, the terminal sending the first signaling to the network device includes at least one of:
sending the first signaling via a physical uplink shared channel (PUSCH);
sending the first signaling via a physical uplink control channel (PUCCH); or
sending uplink control information (UCI) to the network device.

In embodiments of the present disclosure, the terminal sends the first signaling via the PUSCH to the network device, in which the first signaling includes the preparation time. In this way, the network device and the terminal may have the same understanding on the preparation time required by the terminal for the UL antenna switching so as to ensure good communication quality.

In embodiments of the present disclosure, the terminal sends the first signaling via the PUCCH to the network device, in which the first signaling includes the preparation time. In this way, the network device and the terminal may have the same understanding on the preparation time required by the terminal for the UL antenna switching so as to ensure good communication quality.

In embodiments of the present disclosure, the terminal sends the first signaling via the UCI to the network device, in which the first signaling includes the preparation time. In this way, the network device and the terminal may have the same understanding on the preparation time required by the terminal for the UL antenna switching so as to ensure good communication quality.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

It may be understood that the terminal is expected to cancel or suspend interaction with the network device in the preparation time in the case that the preparation time required by the terminal for the UL antenna switching is determined.

In some embodiments, the terminal is expected to suspend UL transmission in the preparation time; and/or suspend reception of downlink transmission of the network device in the preparation time.

In embodiments of the present disclosure, the terminal is expected to suspend the UL transmission in the preparation time in the case that the preparation time required by the terminal for the UL antenna switching is determined.

In embodiments of the present disclosure, the terminal is expected to suspend reception of downlink transmission of the network device in the preparation time in the case that the preparation time required by the terminal for the UL antenna switching is determined.

In embodiments of the present disclosure, the terminal is expected to suspend the UL transmission in the preparation time and suspend reception of downlink transmission of the network device in the preparation time in the case that the preparation time required by the terminal for the UL antenna switching is determined.

In embodiments of the present disclosure, the terminal determining the preparation time required by the terminal for the UL antenna switching includes: in response to satisfying a specific condition, determining the preparation time required by the terminal for the UL antenna switching.

In embodiments of the present disclosure, the terminal determining the preparation time required by the terminal for the UL antenna switching may, in response to satisfying the specific condition, determine the preparation time required by the terminal for the UL antenna switching.

In some embodiments, the specific condition includes at least one of:
a switching pattern of the terminal involving two frequency bands;
a switching pattern of the terminal involving more than two frequency bands; or
the UL antenna switching of the terminal occurring among different switching cases.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In some embodiments, the switching pattern includes at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

In one possible implementation, the specific condition includes that the switching pattern of the terminal involves two frequency bands, in which the switching pattern includes the switching between one single-port UL frequency band and another single-port UL frequency band.

In another possible implementation, the specific condition includes that the switching pattern of the terminal involves more than two frequency bands, in which the switching pattern includes the switching among two single-port UL frequency bands and another two single-port UL frequency bands.

In another possible implementation, the specific condition includes that the switching pattern of the terminal involves more than two frequency bands, in which the switching pattern includes the first port state being in the first frequency band and the second port being in the pre-stored state of the second frequency band before the switching, and at least one port state being in the third frequency band.

It needs to be noted that above implementations are only indicative, which is not limited in embodiments of the present disclosure.

In some embodiments, the first port state being in the first frequency band means that the terminal is capable to send data via the first port in the first frequency band in a state before the switching.

In embodiments of the present disclosure, the first port state being in the first frequency band may be that the terminal is capable to send the data via the first port in the first frequency band in the state before the switching.

In some embodiments, the second port being in the pre-stored state of the second frequency band means that the terminal does not send data via the second port in a state before the switching.

In embodiments of the present disclosure, a second port state being in the pre-stored state of the second frequency band may be that the terminal does not send the data via the second port in the state before the switching.

In some embodiments, the switching pattern of the terminal involving more than two frequency bands includes at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

In embodiments of the present disclosure, the switching pattern of the terminal involving more than two frequency bands includes the terminal supporting the three frequency bands, and the switching occurring among the three frequency bands.

In embodiments of the present disclosure, the switching pattern of the terminal involving more than two frequency bands includes the terminal supporting the four frequency bands, the network device configuring three of the four frequency bands, and the switching occurring among the three frequency bands.

In embodiments of the present disclosure, the switching pattern of the terminal involving more than two frequency bands includes the terminal supporting the four frequency bands, and the switching occurring among the four frequency bands.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In embodiments of the present disclosure, the specific condition includes that the UL antenna switching occurs among different switching cases. The different switching cases are shown in Table 1 below.

**Table 1**

| switching case | Band# 1 | Band#2 | Band#3 | Band#4 |
|---|---|---|---|---|
| case#1 | 1 | 1 | 0 | 0 |
| case#2 | 1 | 0 | 1 | 0 |
| case#3 | 1 | 0 | 0 | 1 |
| case#4 | 0 | 1 | 1 | 0 |
| case#5 | 0 | 1 | 0 | 1 |
| case#6 | 0 | 0 | 1 | 1 |
| case#7 | 2 | 0 | 0 | 0 |
| case#8 | 0 | 2 | 0 | 0 |
| case#9 | 0 | 0 | 2 | 0 |
| case#10 | 0 | 0 | 0 | 2 |
| case#11 | 1 | 1 | 0 | - |
| case#12 | 1 | 0 | 1 | - |
| case#13 | 0 | 1 | 1 | - |
| case#14 | 2 | 0 | 0 | - |
| case#15 | 0 | 2 | 0 | - |
| case#16 | 0 | 0 | 2 | - |

In case#1 to case#10, the terminal supports 4 frequency bands (band#1, band#2, band3# and band#4); and in case#11 to case#16, the terminal supports 3 frequency bands (band#1, band#2 and band3#). "0" means that no antenna operates in the frequency band, "1" means there is one antenna operates in the band, and "2" means there are two antennas operates in the band.

In some embodiments, the terminal is equipped with at least a first antenna and a second antenna, and the switching case includes at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In a possible implementation, the specific condition includes that the UL antenna switching occurs among different switching cases. The different switching cases may be: case1#: the first antenna operates in a first frequency band, and the second antenna operates in a second frequency band; and case2#: the first antenna operates in a first frequency band, and the second antenna operates in a third frequency band. The specific condition includes that the UL antenna switching occurs between case1# and case2#, for example, switching from case1# to case2#, or switching from case2# to case1#.

It needs to be noted that the above implementations are only illustrative and do not limit embodiments of the present disclosure. The embodiments of the present disclosure are not limited to the above implementations, for example, the switching case may also be other cases other than case1# and case2#.

By implementing embodiments of the present disclosure, the terminal determines the preparation time required by the terminal for the UL antenna switching, in which the preparation time includes the first time for the preparation and/or the second time for the antenna switching. In this way, it is possible to support to determine the preparation time required by the terminal for the UL antenna switching so as to ensure good communication quality.

Referring to FIG. 3, FIG. 3 is a flowchart of another method for determining preparation time for UL antenna switching according to an embodiment of the present disclosure.

As shown in FIG. 3, the method is performed by a network device. The method may include but is not limited to S31.

At S31, the network device determines preparation time required by the terminal for UL antenna switching, in which the preparation time includes first time for preparation and/or second time for antenna switching.

In embodiments of the present disclosure, the network device may default to a time period as the preparation time required by the terminal for the UL antenna switching, or may also receive time reported by the terminal and determine the time as the preparation time required by the terminal for the UL antenna switching.

For different terminals, the network device may uniformly default to the time period as the preparation time required by the terminal for the UL antenna switching, or the network device may default different time periods for different terminals, that is, preparation time required by different terminals 1 for the UL antenna switching may be different.

Different terminals may be terminals with different terminal capabilities, or terminals with different types, or terminals that perform different communication tasks, etc., which are not limited in embodiments of the present disclosure.

In some embodiments, the network device receives the preparation time reported by the terminal.

In embodiments of the present disclosure, the network device may receive the preparation time reported by the terminal and determine the preparation time as the preparation time required by the terminal for the UL antenna switching.

The terminal may report the preparation time to the network device when the preparation time required by the terminal for the UL antenna switching is determined. In this way, the network device and the terminal may have the same understanding on the preparation time required by the terminal for the UL antenna switching so as to ensure good communication quality.

In some embodiments, the network device receiving the preparation time reported by the terminal includes:
receiving capability information reported by the terminal, in which the capability information includes the preparation time; or
receiving first signaling sent by the terminal, in which the first signaling includes the preparation time.

In embodiments of the present disclosure, the network device receives the capability information reported by the terminal, in which the capability information includes the preparation time. In this way, the network device and the terminal may have the same understanding on the preparation time required by the terminal for the UL antenna switching so as to ensure good communication quality.

In embodiments of the present disclosure, the network device receives the first signaling sent by the terminal, in which the first signaling includes the preparation time. In this way, the network device and the terminal may have the same understanding on the preparation time required by the terminal for the UL antenna switching so as to ensure good communication quality.

In some embodiments, the network device receiving the first signaling sent by the terminal includes at least one of:
receiving the first signaling sent by the terminal via a PUSCH;
receiving the first signaling sent by the terminal via a PUCCH; or
receiving UCI sent by the terminal.

In embodiments of the present disclosure, the network device receives the first signaling sent by the terminal via the PUSCH, in which the first signaling includes the preparation time. In this way, the network device and the terminal may have the same understanding on the preparation time required by the terminal for the UL antenna switching so as to ensure good communication quality.

In embodiments of the present disclosure, the network device receives the first signaling sent by the terminal via the PUCCH, in which the first signaling includes the preparation time. In this way, the network device and the terminal may have the same understanding on the preparation time required by the terminal for the UL antenna switching so as to ensure good communication quality.

In embodiments of the present disclosure, the network device receives the first signaling sent by the terminal via the UCI, in which the first signaling includes the preparation time. In this way, the network device and the terminal may have the same understanding on the preparation time required by the terminal for the UL antenna switching so as to ensure good communication quality.

The preparation time may include the first time for preparation. For example, the preparation time includes a time period from when the terminal determines that the UL antenna switching is required to when the UL antenna switching is actually performed. For example, the preparation time includes time required for the terminal to make a preparation work for accurately performing the UL antenna switching. The preparation work may include, for example, memory update, memory determination, memory refreshing, uplink/downlink transmission arrangement, and so on.

The preparation time may include the second time for the antenna switching. For example, the preparation time includes time from beginning of the UL antenna switching to completion of the UL antenna switching on the terminal.

The preparation time may include the first time for the preparation and/or the second time for antenna switching. For example, the preparation time includes a time period from when the terminal determines that the UL antenna switching is required to when the UL antenna switching is actually completed.

In some embodiments, the preparation time includes at least one of:
time required for the terminal to refresh a memory unit;
time required for the terminal to load a memory unit;
time in which the terminal interrupts all ongoing transmissions; or
time in which the network device suspends scheduling for the terminal.

In embodiments of the present disclosure, the preparation time may include the time required for the terminal to refresh the memory unit.

It may be understood that in case that the preparation time includes the first time for the preparation and/or the second time for antenna switching and the preparation time includes the time required for the terminal to refresh the memory unit, the first time may include the time required for the terminal to refresh the memory unit.

In embodiments of the present disclosure, the preparation time may include the time required for the terminal to load the memory unit.

It may be understood that in case that the preparation time includes the first time for the preparation and/or the second time for antenna switching and the preparation time includes the time required for the terminal to load the memory unit, the first time may include the time required for the terminal to load the memory unit.

In embodiments of the present disclosure, the preparation time may include the time in which the terminal interrupts all ongoing transmissions.

It may be understood that in case that the preparation time includes the first time for the preparation and/or the second time for antenna switching and the preparation time includes the time in which the terminal interrupts all ongoing transmissions, the first time may include the time in which the terminal interrupts all ongoing transmissions.

In embodiments of the present disclosure, the preparation time may include the time in which the network device suspends the scheduling for the terminal.

It may be understood that in case that the preparation time includes the first time for the preparation and/or the second time for antenna switching and the preparation time includes the time in which the network device suspends the scheduling for the terminal, the first time may include the time in which the network device suspends the scheduling for the terminal.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

It may be understood that the network device is expected to cancel or suspend interaction with the terminal in the preparation time in the case that the preparation time required by the terminal for the UL antenna switching is determined.

In some embodiments, the network device is expected to suspend reception of UL transmission of the terminal in the preparation time; and/or suspend downlink transmission in the preparation time.

In embodiments of the present disclosure, the terminal is expected to suspend the reception of the UL transmission of the terminal in the preparation time in the case that the preparation time required by the terminal for the UL antenna switching is determined.

In embodiments of the present disclosure, the terminal is expected to suspend the downlink transmission in the preparation time in the case that the preparation time required by the terminal for the UL antenna switching is determined.

In embodiments of the present disclosure, the terminal is expected to suspend the reception of the UL transmission of the terminal in the preparation time and suspend the downlink transmission in the preparation time in the case that the preparation time required by the terminal for the UL antenna switching.

In embodiments of the present disclosure, the network device determining the preparation time required by the terminal for the UL antenna switching includes: in response to satisfying a specific condition, determining the preparation time required by the terminal for the UL antenna switching.

In embodiments of the present disclosure, the network device determining the preparation time required by the terminal for the UL antenna switching may, in response to satisfying the specific condition, determine the preparation time required by the terminal for the UL antenna switching.

In some embodiments, the specific condition includes at least one of:
a switching pattern of the terminal involving two frequency bands;
a switching pattern of the terminal involving more than two frequency bands; or
the UL antenna switching of the terminal occurring among different switching cases.

In embodiments of the present disclosure, the specific condition includes a switching pattern of the terminal involving two frequency bands.

In embodiments of the present disclosure, the specific condition includes a switching pattern of the terminal involving more than two frequency bands.

In embodiments of the present disclosure, the specific condition includes the UL antenna switching of the terminal occurring among different switching cases.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In some embodiments, the switching pattern includes at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In one possible implementation, the specific condition includes that the switching pattern involves two frequency bands, in which the switching pattern includes the switching between one single-port UL frequency band and another single-port UL frequency band.

In another possible implementation, the specific condition includes that the switching pattern involves more than two frequency bands, in which the switching pattern includes the switching among two single-port UL frequency bands and another two single-port UL frequency bands.

In another possible implementation, the specific condition includes that the switching pattern of the terminal involves more than two frequency bands, in which the switching pattern includes the first port state being in the first frequency band and the second port being in the pre-stored state of the second frequency band before the switching, and at least one port state being in the third frequency band.

It needs to be noted that above implementations are only indicative, which is not limited in embodiments of the present disclosure. The embodiments of the present disclosure are not limited to the above implementations.

In some embodiments, the first port state being in the first frequency band means that the terminal is capable to send data via the first port in the first frequency band in a state before the switching.

In embodiments of the present disclosure, the first port state being in the first frequency band may be that the terminal is capable to send the data via the first port in the first frequency band in the state before the switching.

In some embodiments, the second port being in the pre-stored state of the second frequency band means that the terminal does not send data via the second port in a state before the switching.

In embodiments of the present disclosure, a second port state being in the pre-stored state of the second frequency band may be that the terminal does not send the data via the second port in the state before the switching.

In some embodiments, the switching pattern of the terminal involving more than two frequency bands includes at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

In embodiments of the present disclosure, the switching pattern of the terminal involving more than two frequency bands includes the terminal supporting the three frequency bands, and the switching occurring among the three frequency bands.

In embodiments of the present disclosure, the switching pattern of the terminal involving more than two frequency bands includes the terminal supporting the four frequency bands, the network device configuring three of the four frequency bands, and the switching occurring among the three frequency bands.

In embodiments of the present disclosure, the switching pattern of the terminal involving more than two frequency bands includes the terminal supporting the four frequency bands, and the switching occurring among the four frequency bands.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In embodiments of the present disclosure, the specific condition includes that the UL antenna switching occurs among different switching cases. The different switching cases are shown in Table 1 above.

In some embodiments, the terminal is equipped with at least a first antenna and a second antenna, and the switching case includes at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In a possible implementation, the specific condition includes that the UL antenna switching occurs among different switching cases. The different switching cases may be: case1#: the first antenna operates in a first frequency band, and the second antenna operates in a second frequency band; and case2#: the first antenna operates in a first frequency band, and the second antenna operates in a third frequency band. The specific condition includes that the UL antenna switching occurs between case1# and case2#, for example, switching from case1# to case2#, or switching from case2# to case1#.

It needs to be noted that the above implementations are only illustrative and do not limit embodiments of the present disclosure. The embodiments of the present disclosure are not limited to the above implementations, for example, the switching case may also be other cases other than case1# and case2#.

It may be understood that the network device and the terminal need to have the same understanding on the preparation time required by the terminal for the UL antenna switching so as to ensure good communication quality.

Based on this, the network device may send the preparation time to the terminal when determining the preparation time required by the terminal for the UL antenna switching.

In some embodiments, the network device sends indication information to the terminal, in which the indication information indicates the preparation time required by the terminal for the UL antenna switching.

In embodiments of the present disclosure, the network device may send the indication information to the terminal to indicate the preparation time required by the terminal for the UL antenna switching; and based on this, the terminal may determine the preparation time according to the indication information in case that the terminal receives the indication information sent by the network device. In this way, the network device and the terminal may have the same understanding on the preparation time required by the terminal for the UL antenna switching so as to ensure good communication quality.

In some embodiments, the network device sending the indication information to the terminal includes at least one of:
sending semi-static signaling to the terminal;
sending a MAC CE to the terminal; or
sending DCI to the terminal.

In embodiments of the present disclosure, the network device sending the indication information to the terminal may refer to sending the semi-static signaling to the terminal, in which the semi-static signaling refers to RRC signaling, and the RRC signaling includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

In embodiments of the present disclosure, the network device sending the indication information to the terminal may refer to sending the MAC CE to the terminal, in which the MAC CE includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

In embodiments of the present disclosure, the network device sending the indication information to the terminal may refer to sending the DCI to the terminal, in which the DCI includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

It needs to be noted that in embodiments of the present disclosure, S31 may be implemented independently or in combination with any one of other steps in the embodiments of the present disclosure, such as in combination with S21 in the embodiments of the present disclosure, which is not limited in the embodiments of the present disclosure.

By implementing embodiments of the present disclosure, the network device determines the preparation time required by the terminal for the UL antenna switching, in which the preparation time includes the first time for the preparation and/or the second time for the antenna switching. In this way, it is possible to support to determine the preparation time required by the terminal for the UL antenna switching so as to ensure good communication quality.

Referring to FIG. 4, FIG. 4 is a flowchart of another method for determining preparation time for UL antenna switching according to an embodiment of the present disclosure.

As shown in FIG. 4, the method may include, but is not limited to S41.

At S41, in response to satisfying a specific condition, the terminal determines preparation time required by the terminal for UL antenna switching, in which the preparation time includes first time for preparation and/or second time for antenna switching.

In embodiments of the present disclosure, in response to satisfying the specific condition, the terminal determines the preparation time required by the terminal for the UL antenna switching.

In some embodiments, the specific condition includes at least one of:
a switching pattern of the terminal involving two frequency bands;
a switching pattern of the terminal involving more than two frequency bands; or
the UL antenna switching of the terminal occurring among different switching cases.

In embodiments of the present disclosure, the specific condition includes a switching pattern of the terminal involving two frequency bands.

In embodiments of the present disclosure, the specific condition includes a switching pattern of the terminal involving more than two frequency bands.

In embodiments of the present disclosure, the specific condition includes the UL antenna switching occurring among different switching cases.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In some embodiments, the switching pattern includes at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In one possible implementation, the specific condition includes that the switching pattern involves two frequency bands, in which the switching pattern includes the switching between one single-port UL frequency band and another single-port UL frequency band.

In another possible implementation, the specific condition includes that the switching pattern involves more than two frequency bands, in which the switching pattern includes the switching among two single-port UL frequency bands and another two single-port UL frequency bands.

In another possible implementation, the specific condition includes that the switching pattern of the terminal involves more than two frequency bands, in which the switching pattern includes the first port state being in the first frequency band and the second port being in the pre-stored state of the second frequency band before the switching, and at least one port state being in the third frequency band.

It needs to be noted that above implementations are only indicative, which is not limited in embodiments of the present disclosure. The embodiments of the present disclosure are not limited to the above implementations.

In some embodiments, the first port state being in the first frequency band means that the terminal is capable to send data via the first port in the first frequency band in a state before the switching.

In embodiments of the present disclosure, the first port state being in the first frequency band may be that the terminal is capable to send the data via the first port in the first frequency band in the state before the switching.

In some embodiments, the second port being in the pre-stored state of the second frequency band means that the terminal does not send data via the second port in a state before the switching.

In embodiments of the present disclosure, a second port state being in the pre-stored state of the second frequency band may be that the terminal does not send the data via the second port in the state before the switching.

In some embodiments, the switching pattern of the terminal involving more than two frequency bands includes at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

In embodiments of the present disclosure, the switching pattern of the terminal involving more than two frequency bands includes the terminal supporting the three frequency bands, and the switching occurring among the three frequency bands.

In embodiments of the present disclosure, the switching pattern of the terminal involving more than two frequency bands includes the terminal supporting the four frequency bands, the network device configuring three of the four frequency bands, and the switching occurring among the three frequency bands.

In embodiments of the present disclosure, the switching pattern of the terminal involving more than two frequency bands includes the terminal supporting the four frequency bands, and the switching occurring among the four frequency bands.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In embodiments of the present disclosure, the specific condition includes that the UL antenna switching occurs among different switching cases. The different switching cases are shown in Table 1 above.

In some embodiments, the terminal is equipped with at least a first antenna and a second antenna, and the switching case includes at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In a possible implementation, the specific condition includes that the UL antenna switching occurs among different switching cases. The different switching cases may be: case1#: the first antenna operates in a first frequency band, and the second antenna operates in a second frequency band; and case2#: the first antenna operates in a first frequency band, and the second antenna operates in a third frequency band. The specific condition includes that the UL antenna switching occurs between case1# and case2#, for example, switching from case1# to case2#, or switching from case2# to case1#.

It needs to be noted that the above implementations are only illustrative and do not limit embodiments of the present disclosure. The embodiments of the present disclosure are not limited to the above implementations, for example, the switching case may also be other cases other than case1# and case2#.

It needs to be noted that in embodiments of the present disclosure, S41 may be implemented independently or in combination with any one of other steps in the embodiments of the present disclosure, such as in combination with S21 and/or S31 in the embodiments of the present disclosure, which is not limited in the embodiments of the present disclosure.

By implementing embodiments of the present disclosure, in response to satisfying the specific condition, the terminal determines the preparation time required by the terminal for the UL antenna switching, in which the preparation time includes the first time for the preparation and/or the second time for antenna switching. In this way, in response to satisfying the specific condition, it is possible to determine the preparation time required by the terminal for the UL antenna switching so as to ensure good communication quality.

Referring to FIG. 5, FIG. 5 is a flowchart of another method for determining preparation time for UL antenna switching according to an embodiment of the present disclosure.

As shown in FIG. 5, the method may include, but is not limited to S51.

At S51, in response to satisfying a specific condition, the network device determines preparation time required by the terminal for UL antenna switching, in which the preparation time includes first time for preparation and/or second time for antenna switching.

In embodiments of the present disclosure, in response to satisfying the specific condition, the network device determines the preparation time required by the terminal for the UL antenna switching.

In some embodiments, the specific condition includes at least one of:
a switching pattern of the terminal involving two frequency bands;
a switching pattern of the terminal involving more than two frequency bands; or
the UL antenna switching of the terminal occurring among different switching cases.

In embodiments of the present disclosure, the specific condition includes a switching pattern of the terminal involving two frequency bands.

In embodiments of the present disclosure, the specific condition includes a switching pattern of the terminal involving more than two frequency bands.

In embodiments of the present disclosure, the specific condition includes the UL antenna switching occurring among different switching cases.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In some embodiments, the switching pattern includes at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In one possible implementation, the specific condition includes that the switching pattern involves two frequency bands, in which the switching pattern includes the switching between one single-port UL frequency band and another single-port UL frequency band.

In another possible implementation, the specific condition includes that the switching pattern involves more than two frequency bands, in which the switching pattern includes the switching among two single-port UL frequency bands and another two single-port UL frequency bands.

In another possible implementation, the specific condition includes that the switching pattern of the terminal involves more than two frequency bands, in which the switching pattern includes the first port state being in the first frequency band and the second port being in the pre-stored state of the second frequency band before the switching, and at least one port state being in the third frequency band.

It needs to be noted that above implementations are only indicative, which is not limited in embodiments of the present disclosure. The embodiments of the present disclosure are not limited to the above implementations.

In some embodiments, the first port state being in the first frequency band means that the terminal is capable to send data via the first port in the first frequency band in a state before the switching.

In embodiments of the present disclosure, the first port state being in the first frequency band may be that the terminal is capable to send the data via the first port in the first frequency band in the state before the switching.

In some embodiments, the second port being in the pre-stored state of the second frequency band means that the terminal does not send data via the second port in a state before the switching.

In embodiments of the present disclosure, a second port state being in the pre-stored state of the second frequency band may be that the terminal does not send the data via the second port in the state before the switching.

In some embodiments, the switching pattern of the terminal involving more than two frequency bands includes at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

In embodiments of the present disclosure, the switching pattern of the terminal involving more than two frequency bands includes the terminal supporting the three frequency bands, and the switching occurring among the three frequency bands.

In embodiments of the present disclosure, the switching pattern of the terminal involving more than two frequency bands includes the terminal supporting the four frequency bands, the network device configuring three of the four frequency bands, and the switching occurring among the three frequency bands.

In embodiments of the present disclosure, the switching pattern of the terminal involving more than two frequency bands includes the terminal supporting the four frequency bands, and the switching occurring among the four frequency bands.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In embodiments of the present disclosure, the specific condition includes that the UL antenna switching occurs among different switching cases. The different switching cases are shown in Table 1 above.

In some embodiments, the terminal is equipped with at least a first antenna and a second antenna, and the switching case includes at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

In a possible implementation, the specific condition includes that the UL antenna switching of the terminal occurs among different switching cases. The different switching cases may be: case1#: the first antenna operates in a first frequency band, and the second antenna operates in a second frequency band; and case2#: the first antenna operates in a first frequency band, and the second antenna operates in a third frequency band. The specific condition includes that the UL antenna switching occurs between case1# and case2#, for example, switching from case1# to case2#, or switching from case2# to case1#.

It needs to be noted that the above implementations are only illustrative and do not limit embodiments of the present disclosure. The embodiments of the present disclosure are not limited to the above implementations, for example, the switching case may also be other cases other than case1# and case2#.

It needs to be noted that in embodiments of the present disclosure, S51 may be implemented independently or in combination with any one of other steps in the embodiments of the present disclosure, such as in combination with S21 and/or S31 and/or S41 in the embodiments of the present disclosure, which is not limited in the embodiments of the present disclosure.

By implementing embodiments of the present disclosure, in response to satisfying the specific condition, the network device determines the preparation time required by the terminal for the UL antenna switching, in which the preparation time includes the first time for the preparation and/or the second time for antenna switching. In this way, in response to satisfying the specific condition, it is possible to determine the preparation time required by the terminal for the UL antenna switching so as to ensure good communication quality.

Referring to FIG. 6, FIG. 6 is a flowchart of another method for determining preparation time for UL antenna switching according to an embodiment of the present disclosure.

As shown in FIG. 6, the method may include, but is not limited to S61 and S62.

At S61, the terminal determines preparation time required by the terminal for UL antenna switching, in which the preparation time includes first time for preparation and/or second time for antenna switching.

For a relevant description of S61, reference may be made to the relevant description in the above embodiments, which will not be repeated here.

At S62, the terminal suspends UL transmission in the preparation time; and/or suspends reception of downlink transmission of the network device in the preparation time.

In embodiments of the present disclosure, the terminal may suspend the UL transmission in the preparation time when determining the preparation time required by the terminal for the UL antenna switching.

In embodiments of the present disclosure, the terminal may suspend the reception of the downlink transmission of the network device in the preparation time when determining the preparation time required by the terminal for the UL antenna switching.

In embodiments of the present disclosure, the terminal may suspend the UL transmission in the preparation time and suspend the reception of the downlink transmission of the network device in the preparation time when determining the preparation time required by the terminal for the UL antenna switching.

It needs to be noted that in embodiments of the present disclosure, S61 and S62 may be implemented independently or in combination with any one of other steps in the embodiments of the present disclosure, such as in combination with S21 and/or S31 and/or S41 and/or S51 in the embodiments of the present disclosure, which is not limited in the embodiments of the present disclosure.

By implementing embodiments of the present disclosure, the terminal determines the preparation time required by the terminal for the UL antenna switching, in which the preparation time includes the first time for the preparation and/or the second time for the antenna switching. The terminal suspends the UL transmission in the preparation time; and/or suspends the reception of the downlink transmission of the network device in the preparation time. In this way, it is possible to support to determine the preparation time required by the terminal for the UL antenna switching and suspend the UL transmission and/or suspend the reception of the downlink transmission of the network device in the preparation time so as to ensure good communication quality.

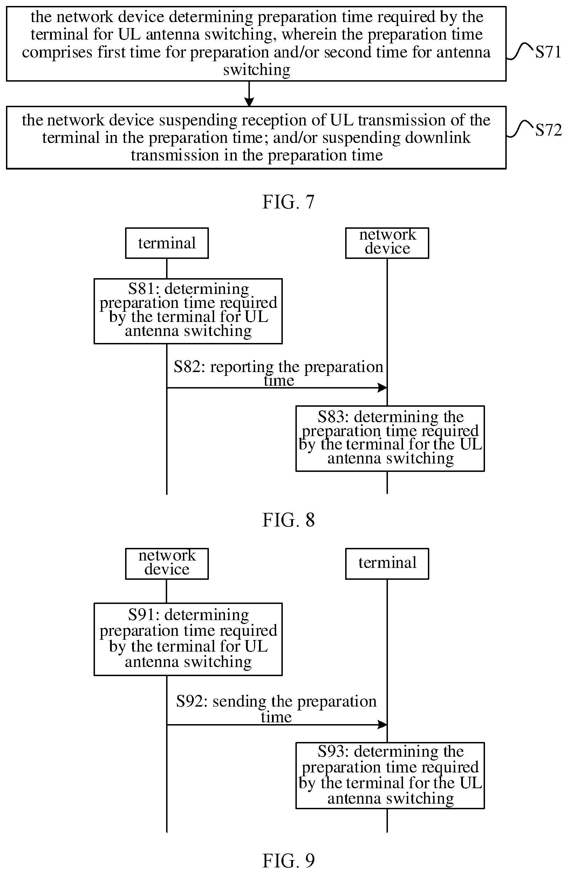

Referring to FIG. 7, FIG. 7 is a flowchart of another method for determining preparation time for UL antenna switching according to an embodiment of the present disclosure.

As shown in FIG. 7, the method may include, but is not limited to S71 and S72.

At S71, the network device determines preparation time required by the terminal for UL antenna switching, in which the preparation time includes first time for preparation and/or second time for antenna switching.

For a relevant description of the preparation time in S71, reference may be made to the relevant description in the above embodiments, which will not be repeated here.

At S72, the network device suspends reception of UL transmission of the terminal in the preparation time; and/or suspends downlink transmission in the preparation time.

In embodiments of the present disclosure, the network device may suspend the reception of the UL transmission of the terminal in the preparation time when determining the preparation time required by the terminal for the UL antenna switching.

In embodiments of the present disclosure, the network device may suspend the downlink transmission in the preparation time when determining the preparation time required by the terminal for the UL antenna switching.

In embodiments of the present disclosure, the network device may suspend the reception of the UL transmission of the terminal in the preparation time and suspend the downlink transmission in the preparation time when determining the preparation time required by the terminal for the UL antenna switching.

It needs to be noted that in embodiments of the present disclosure, S71 and S72 may be implemented independently or in combination with any one of other steps in the embodiments of the present disclosure, such as in combination with S21 and/or S31 and/or S41 and/or S51 and/or S61 and S62 in the embodiments of the present disclosure, which is not limited in the embodiments of the present disclosure.

By implementing embodiments of the present disclosure, the network device determines the preparation time required by the terminal for the UL antenna switching, in which the preparation time includes the first time for the preparation and/or the second time for the antenna switching; and suspends the reception of the UL transmission of the terminal in the preparation time, and/or suspends the downlink transmission in the preparation time. In this way, it is possible to support to determine the preparation time required by the terminal for the UL antenna switching and suspend the reception of the UL transmission of the terminal and/or suspend the downlink transmission in the preparation time so as to ensure good communication quality.

Referring to FIG. 8, FIG. 8 is a flowchart of another method for determining preparation time for UL antenna switching according to an embodiment of the present disclosure.

As shown in FIG. 8, the method may include, but is not limited to S81 to S83.

At S81, the terminal determines preparation time required by the terminal for UL antenna switching, in which the preparation time includes first time for preparation and/or second time for antenna switching.

In embodiments of the present disclosure, the terminal may determine the preparation time required by the terminal for the UL antenna switching based on an implementation, or based on an agreement of a protocol.

For a relevant description of the preparation time, reference may be made to the relevant description in the above embodiments, which will not be repeated here.

At S82, the terminal reports the preparation time to the network device.

At S83, the network device determines the preparation time required by the terminal for the UL antenna switching.

In embodiments of the present disclosure, the terminal may report the preparation time to the network device when determining the preparation time required by the terminal for the UL antenna switching. In this way, the network device and the terminal may have the same understanding on the preparation time required by the terminal for the UL antenna switching so as to ensure good communication quality.

In some embodiments, the terminal reporting the preparation time to the network device includes:
reporting capability information to the network device, in which the capability information includes the preparation time; or
sending first signaling to the network device, in which the first signaling includes the preparation time.

In embodiments of the present disclosure, the terminal reports the capability information to the network device, in which the capability information includes the preparation time. In this way, the network device and the terminal may have the same understanding on the preparation time required by the terminal for the UL antenna switching so as to ensure good communication quality.

In embodiments of the present disclosure, the terminal reports the first signaling to the network device, in which the first signaling includes the preparation time. In this way, the network device and the terminal may have the same understanding on the preparation time required by the terminal for the UL antenna switching so as to ensure good communication quality.

In some embodiments, the terminal sending the first signaling to the network device includes at least one of:
sending the first signaling via a PUSCH;
sending the first signaling via a PUCCH; or
sending UCI to the network device.

In embodiments of the present disclosure, the terminal sends the first signaling via the PUSCH to the network device, in which the first signaling includes the preparation time. In this way, the network device and the terminal may have the same understanding on the preparation time required by the terminal for the UL antenna switching so as to ensure good communication quality.

In embodiments of the present disclosure, the terminal sends the first signaling via the PUCCH to the network device, in which the first signaling includes the preparation time. In this way, the network device and the terminal may have the same understanding on the preparation time required by the terminal for the UL antenna switching so as to ensure good communication quality.

In embodiments of the present disclosure, the terminal sends the first signaling via the UCI to the network device, in which the first signaling includes the preparation time. In this way, the network device and the terminal may have the same understanding on the preparation time required by the terminal for the UL antenna switching so as to ensure good communication quality.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

It needs to be noted that in embodiments of the present disclosure, S81-S83 may be implemented independently or in combination with any one of other steps in the embodiments of the present disclosure, such as in combination with S21 and/or S31 and/or S41 and/or S51 and/or S61 and S62 and/or S71 and S72 in the embodiments of the present disclosure, which is not limited in the embodiments of the present disclosure.

By implementing embodiments of the present disclosure, the terminal determines the preparation time required by the terminal for the UL antenna switching, in which the preparation time includes the first time for the preparation and/or the second time for the antenna switching; the terminal reports the preparation time to the network device; and the network device determines the preparation time required by the terminal for the UL antenna switching. In this way, the network device and the terminal may have the same understanding on the preparation time required by the terminal for the UL antenna switching so as to ensure good communication quality.

Referring to FIG. 9, FIG. 9 is a flowchart of another method for determining preparation time for UL antenna switching according to an embodiment of the present disclosure.

As shown in FIG. 9, the method may include, but is not limited to S91 to S93.

At S91, the network device determines preparation time required by the terminal for UL antenna switching, in which the preparation time includes first time for preparation and/or second time for antenna switching.

In embodiments of the present disclosure, the network device may default to time and determine the time as the preparation time required by the terminal for the UL antenna switching.

For a relevant description of the preparation time, reference may be made to the relevant description in the above embodiments, which will not be repeated here.

At S92, the network device sends indication information to the terminal, in which the indication information indicates the preparation time required by the terminal for the UL antenna switching.

At S93, the terminal determines the preparation time required by the terminal for the UL antenna switching.

In embodiments of the present disclosure, the network device may send the indication information to the terminal to indicate the preparation time required by the terminal for the UL antenna switching; and based on this, the terminal may determine the preparation time according to the indication information in case that the terminal receives the indication information sent by the network device. In this way, the network device and the terminal may have the same understanding on the preparation time required by the terminal for the UL antenna switching so as to ensure good communication quality.

In some embodiments, the network device sending the indication information to the terminal includes at least one of:
sending semi-static signaling to the terminal;
sending a MAC CE to the terminal; or
sending DCI to the terminal.

In embodiments of the present disclosure, the network device sending the indication information to the terminal may refer to sending the semi-static signaling to the terminal, in which the semi-static signaling includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

In embodiments of the present disclosure, the network device sending the indication information to the terminal may refer to sending the MAC CE to the terminal, in which the MAC CE includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

In embodiments of the present disclosure, the network device sending the indication information to the terminal may refer to sending the DCI to the terminal, in which the DCI includes the indication information. Thus, the terminal may determine the preparation time required by the terminal for the UL antenna switching indicated by the network device. In this way, the network device and the terminal may have the same understanding on the preparation time required by the terminal for the UL antenna switching so as to ensure good communication quality.

It needs to be noted that the above embodiments are not exhaustive and are only indicative of some embodiments. The above embodiments may be implemented independently or in combination with a plurality of embodiments. The above embodiments are only indicative and do not limit a protection scope of embodiments of the present disclosure.

It needs to be noted that in embodiments of the present disclosure, S91 may be implemented independently or in combination with any one of other steps in the embodiments of the present disclosure, such as in combination with S21 and/or S31 and/or S41 and/or S51 and/or S61 and S62 and/or S71 and S72 in the embodiments of the present disclosure, which is not limited in the embodiments of the present disclosure.

By implementing embodiments of the present disclosure, the network device determines the preparation time required by the terminal for the UL antenna switching, in which the preparation time includes the first time for the preparation and/or the second time for the antenna switching; sends the indication information to the terminal, in which the indication information indicates the preparation time required by the terminal for the UL antenna switching; and the terminal determines the preparation time required by the terminal for the UL antenna switching. In this way, the network device and the terminal may have the same understanding on the preparation time required by the terminal for the UL antenna switching so as to ensure good communication quality.

In embodiments of the present disclosure, the method in the present disclosure is introduced in terms of the terminal, the network device, and interaction between the terminal and the network device.

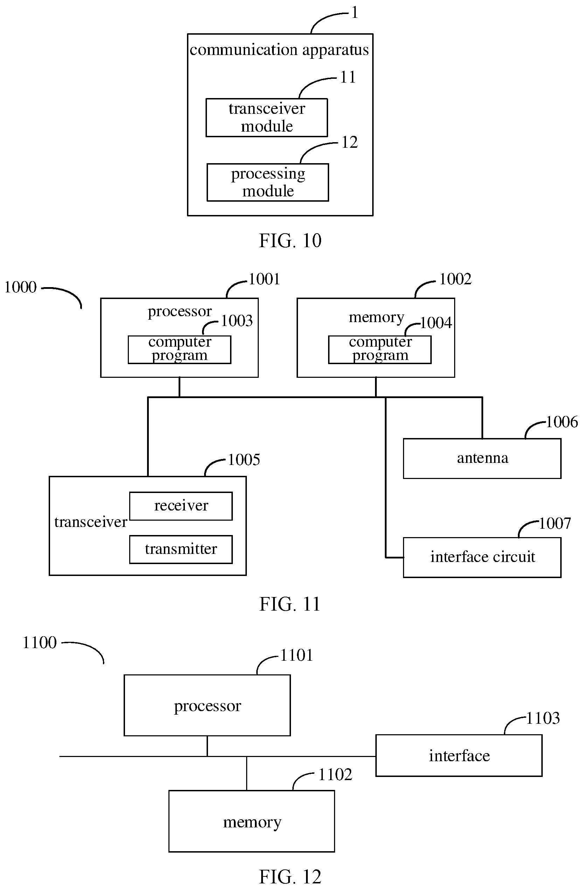

Referring to FIG. 10, FIG. 10 is a block diagram of a communication device 1 according to an embodiment of the present disclosure. The communication device 1 shown in FIG. 10 may include a transceiver module 11 and a processing module 12. The transceiver module may include a sending module and/or a receiving module, in which the sending module is used to achieve the sending function, and the receiving module is used to achieve the receiving function. The transceiver module may achieve the sending function and/or the receiving function.

The communication device 1 may be a terminal, a device in a terminal, or a device capable of being used in combination with a terminal. Or, the communication device 1 may be a network device, a device in a network device, or a device capable of being used in combination with a network device.

When the communication device 1 is a terminal,
the device includes: the processing module 12.

The processing module 12 is configured to determine preparation time required by the terminal for UL antenna switching, in which the preparation time includes first time for preparation and/or second time for antenna switching.

As shown in FIG. 10, in some embodiments, the device also includes: the transceiver module 11.

The transceiver module 11 is configured to report the preparation time to a network device.

In some embodiments, the transceiver module 11 is further configured to report capability information to the network device, in which the capability information includes the preparation time; or send first signaling to the network device, in which the first signaling includes the preparation time.

In some embodiments, the transceiver module 11 is further configured to perform at least one of:
sending the first signaling via a PUSCH;
sending the first signaling via a PUCCH; or
sending UCI to the network device.

In some embodiments, the preparation time includes at least one of:
time required for the terminal to refresh a memory unit;
time required for the terminal to load a memory unit;
time in which the terminal interrupts all ongoing transmissions; or
time in which the network device suspends scheduling for the terminal.

In some embodiments, the transceiver module 11 is further configured to suspend UL transmission in the preparation time; and/or suspend reception of downlink transmission of the network device in the preparation time.

In some embodiments, the processing module 12 is further configured, to in response to satisfying a specific condition, determine the preparation time required by the terminal for the UL antenna switching.

In some embodiments, the specific condition includes at least one of:
a switching pattern of the terminal involving two frequency bands;
a switching pattern of the terminal involving more than two frequency bands; or
the UL antenna switching of the terminal occurring among different switching cases.

In some embodiments, the switching pattern includes at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

In some embodiments, the terminal is equipped with at least a first antenna and a second antenna, and the switching case includes at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

In some embodiments, the switching pattern of the terminal involving more than two frequency bands includes at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

In some embodiments, the first port state being in the first frequency band means that the terminal is capable to send data via the first port in the first frequency band in a state before the switching.

In some embodiments, the second port being in the pre-stored state of the second frequency band means that the terminal does not send data via the second port in a state before the switching.

In some embodiments, the transceiver module 11 is further configured to receive indication information sent by a network device, in which the indication information indicates the preparation time required by the terminal for the UL antenna switching; and
the processing module 12 is further configured to determine the preparation time based on the indication information.

In some embodiments, the transceiver module 11 is further configured to implement at least one of:
receiving semi-static signaling sent by the network device;
receiving a MAC CE sent by the network device; or
receiving DCI sent by the network device.

When the communication device 1 is a network device,
the device includes: the processing module 12.

The processing module 12 is configured to determine preparation time required by the terminal for UL antenna switching, in which the preparation time includes first time for preparation and/or second time for antenna switching.

As shown in FIG. 10, the device also includes: the transceiver module 11.

The transceiver module 11 is configured to receive the preparation time reported by the terminal.

In some embodiments, the transceiver module 11 is further configured to receive capability information reported by the terminal, in which the capability information includes the preparation time; or receive first signaling sent by the terminal, in which the first signaling includes the preparation time.

In some embodiments, the transceiver module 11 is further configured to perform at least one of:
receiving the first signaling sent by the terminal via a PUSCH;
receiving the first signaling sent by the terminal via a PUCCH; or
receiving UCI sent by the terminal.

In some embodiments, the preparation time includes at least one of:
time required for the terminal to refresh a memory unit;
time required for the terminal to load a memory unit;
time in which the terminal interrupts all ongoing transmissions; or
time in which the network device suspends scheduling for the terminal.

In some embodiments, the transceiver module 11 is further configured to suspend reception of UL transmission of the terminal in the preparation time; and/or suspend downlink transmission in the preparation time.

In some embodiments, the processing module 12 is further configured to, in response to satisfying a specific condition, determine the preparation time required by the terminal for the UL antenna switching.

In some embodiments, the specific condition includes at least one of:
a switching pattern of the terminal involving two frequency bands;
a switching pattern of the terminal involving more than two frequency bands; or
the UL antenna switching occurring among different switching cases.

In some embodiments, the switching pattern includes at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

In some embodiments, the terminal is equipped with at least a first antenna and a second antenna, and the switching case includes at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

In some embodiments, the switching pattern of the terminal involving more than two frequency bands includes at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

In some embodiments, the first port state being in the first frequency band means that the terminal is capable to send data via a first port in the first frequency band in a state before the switching.

In some embodiments, the second port being in the pre-stored state of the second frequency band means that the terminal does not send data via the second port in a state before the switching.

In some embodiments, the transceiver module 11 is further configured to send indication information to the terminal, in which the indication information indicates the preparation time required by the terminal for the UL antenna switching.

In some embodiments, the transceiver module 11 is further configured to perform at least one of:
receiving semi-static signaling sent by the network device;
receiving a MAC CE sent by the network device; or
receiving DCI sent by the network device.

As for the communication device 1 in the above embodiments, a specific mode in which each module performs operations has been described in detail in the embodiments of the method, and will not be explained in detail here.

The communication device 1 in the embodiments of the present disclosure has the same or similar beneficial effect as the method for determining preparation time for UL antenna switching in some embodiments above, and will not be described here.

Referring to FIG. 11, FIG. 11 is a block diagram of a communication device 1000 according to an embodiment of the present disclosure. The communication device 1000 may be a terminal, or a network device, or a chip, a chip system, a processor, etc. that supports the terminal to implement the method, or a chip, a chip system, a processor, etc. that supports the network device to implement the method. The communication device 1000 is configured to implement the method in the above method embodiments. For details, reference may be made to the description in the above method embodiments.

The communication device 1000 may include one or more processors 1001. The processor 1001 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device 1000 may also include one or more memories 1002 on which a computer program 1004 is stored. When the computer program 1004 is executed by the memory 1002, the communication device 1000 implements the method in the above method embodiments. Optionally, the memory 1002 may also store data. The communication device 1000 and the memory 1002 may be set separately or integrated together.

Optionally, the communication device 1000 may also include a transceiver 1005 and an antenna 1006. The transceiver 1005 may be called a transceiving unit, a transceiving machine, or a transceiving circuit, etc., to achieve a transceiving function. The transceiver 1005 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication device 1000 includes one or more interface circuits 1007. The interface circuit 1007 is configured to receive code instructions and transmit the code instructions to the processor 1001. The processor 1001 executes the code instructions to cause the communication device 1000 to implement the method in the above method embodiments.

When the communication device 1000 is a first terminal, the processor 1001 is configured to execute S21 in FIG. 2, S41 in FIG. 4, S61 in FIG. 6, S81 in FIG. 8, and S93 in FIG. 9; and the transceiver 1005 is configured to execute S62 in FIG. 6, S82 in FIG. 8, and S92 in FIG. 9.

When the communication device 1000 is a network device, the processor 1001 is configured to execute S31 in FIG. 3, S51 in FIG. 5, S71 in FIG. 7, S83 in FIG. 8, and S91 in FIG. 9; and the transceiver 1005 is configured to execute S72 in FIG. 7, S82 in FIG. 8, and S92 in FIG. 9.

In an implementation, the processor 1001 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 1001 may store a computer program 1003. When the computer program 1003 is running on the processor 1001, the communication device 1000 is caused to implement the method in the above method embodiments. The computer program 1003 may be solidified in the processor 1001. In this way, the processor 1001 may be implemented in hardware.

In an implementation, the communication device 1000 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic device, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal, but the scope of the communication device in the present disclosure is not limited to this, and the structure of the communication device may not be restricted by FIG. 11. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, Referring to FIG. 12, which is a block diagram of a chip according to an embodiment of the present disclosure.

The chip 1100 includes a processor 1101 and an interface 1103. There may be one or more processors 1101, and there may be one or more interfaces 1103.

For the case where the chip is configured to implement functions of the terminal in embodiments of the present disclosure,
the interface 1103 is configured to receive code instructions and transmit the code instructions to the processor; and
the processor 1101 is configured to run the code instructions to implement the method for determining preparation time for UL antenna switching as described in some of the above embodiments.

For the case where the chip is configured to implement functions of the network device in embodiments of the present disclosure,
the interface 1103 is configured to receive code instructions and transmit the code instructions to the processor; and
the processor 1101 is configured to run the code instructions to implement the method for determining preparation time for UL antenna switching as described in some of the above embodiments.

Optionally, the chip 1100 further includes a memory 1102 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

Embodiments of the present disclosure also provide a system for determining preparation time for UL antenna switching. The system includes a communication device as a terminal and a communication device as a network device in the above embodiments of FIG. 10. Or, the system includes a communication device as a terminal and a communication device as a network device in the above embodiments of FIG. 10.

The present disclosure also provides a computer readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center in a wired (such as a coaxial cable, a fiber optic, a digital subscriber line (DSL)) or wireless (such as infrared, wireless, microwave) way. The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of the embodiments of the present disclosure, but also to indicate an order of precedence.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc., are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, defined in advance, stored, pre-stored, pre-negotiated, pre-configured, solidified or pre-fired.

Those skilled in the related art may realize that the units and algorithm steps of the examples described in the embodiments of the present disclosure may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, a device and a unit described above may refer to a corresponding process in the above method embodiments, which will not be repeated here.

The above are only implementations of the present disclosure. However, the protection scope of the present disclosure is not limited here. Changes and substitutions that are easily considered by those skilled in the art shall be contained within the protection scope of the present disclosure. Therefore, the protection scope of the present disclosure shall be subject to the protection scope of claims.

## Claims

1. A method for determining preparation time for uplink (UL) antenna switching, performed by a terminal, comprising:
determining preparation time required by the terminal for UL antenna switching, wherein the preparation time comprises first time for preparation and/or second time for antenna switching.

2. The method of claim 1, further comprising:
reporting the preparation time to a network device.

3. The method of claim 2, wherein reporting the preparation time to the network device comprises:
reporting capability information to the network device, wherein the capability information comprises the preparation time; or
sending first signaling to the network device, wherein the first signaling comprises the preparation time.

4. The method of claim 3, wherein sending the first signaling to the network device comprises at least one of:
sending the first signaling via a physical uplink shared channel (PUSCH);
sending the first signaling via a physical uplink control channel (PUCCH); or
sending uplink control information (UCI) to the network device.

5. The method of any one of claims 1 to 4, wherein the preparation time comprises at least one of:
time required for the terminal to refresh a memory unit;
time required for the terminal to load a memory unit;
time in which the terminal interrupts all ongoing transmissions; or
time in which the network device suspends scheduling for the terminal.

6. The method of any one of claims 1 to 5, further comprising:
suspending UL transmission in the preparation time; and/or
suspending reception of downlink transmission of the network device in the preparation time.

7. The method of any one of claims 1 to 6, wherein determining the preparation time required by the terminal for the UL antenna switching comprises:
in response to satisfying a specific condition, determining the preparation time required by the terminal for the UL antenna switching.

8. The method of claim 7, wherein the specific condition comprises at least one of:
a switching pattern of the terminal involving two frequency bands;
a switching pattern of the terminal involving more than two frequency bands; or
the UL antenna switching of the terminal occurring among different switching cases.

9. The method of claim 8, wherein the switching pattern comprises at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

10. The method of claim 8, wherein the terminal is equipped with at least a first antenna and a second antenna, and the switching case comprises at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

11. The method of claim 8, wherein the switching pattern of the terminal involving more than two frequency bands comprises at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

12. The method of claim 9, wherein the first port state being in the first frequency band means that the terminal is capable to send data via a first port in the first frequency band in a state before the switching.

13. The method of claim 9, wherein the second port being in the pre-stored state of the second frequency band means that the terminal does not send data via the second port in a state before the switching.

14. The method of claim 1, wherein determining the preparation time required by the terminal for the UL antenna switching comprises:
receiving indication information sent by a network device, wherein the indication information indicates the preparation time required by the terminal for the UL antenna switching; and
determining the preparation time based on the indication information.

15. The method of claim 14, wherein receiving the indication information sent by the network device comprises at least one of:
receiving semi-static signaling sent by the network device;
receiving a media access control control element (MAC CE) sent by the network device; or
receiving downlink control information (DCI) sent by the network device.

16. A method for determining preparation time for uplink (UL) antenna switching, performed by a network device, comprising:
determining preparation time required by a terminal for UL antenna switching, wherein the preparation time comprises first time for preparation and/or second time for antenna switching.

17. The method of claim 16, further comprising:
receiving the preparation time reported by the terminal.

18. The method of claim 17, wherein receiving the preparation time reported by the terminal comprises:
receiving capability information reported by the terminal, wherein the capability information comprises the preparation time; or
receiving first signaling sent by the terminal, wherein the first signaling comprises the preparation time.

19. The method of claim 18, wherein receiving the first signaling sent by the terminal comprises at least one of:
receiving the first signaling sent by the terminal via a physical uplink shared channel (PUSCH);
receiving the first signaling sent by the terminal via a physical uplink control channel (PUCCH); or
receiving uplink control information (UCI) sent by the terminal.

20. The method of any one of claims 16 to 19, wherein the preparation time comprises at least one of:
time required for the terminal to refresh a memory unit;
time required for the terminal to load a memory unit;
time in which the terminal interrupts all ongoing transmissions; or
time in which the network device suspends scheduling for the terminal.

21. The method of any one of claims 16 to 20, further comprising:
suspending reception of UL transmission of the terminal in the preparation time; and/or
suspending downlink transmission in the preparation time.

22. The method of any one of claims 16 to 21, wherein determining the preparation time required by the terminal for the UL antenna switching comprises:
in response to satisfying a specific condition, determining the preparation time required by the terminal for the UL antenna switching.

23. The method of claim 22, wherein the specific condition comprises at least one of:
a switching pattern of the terminal involving two frequency bands;
a switching pattern of the terminal involving more than two frequency bands; or
the UL antenna switching occurring among different switching cases.

24. The method of claim 23, wherein the switching pattern comprises at least one of:
the terminal switching among two single-port UL frequency bands and another two single-port UL frequency bands;
the terminal switching among two single-port UL frequency bands and another single-port UL frequency band;
the terminal switching among two single-port UL frequency bands and another dual-port UL frequency band;
the terminal switching among two single-port UL frequency bands and one of single-port UL frequency bands;
the terminal switching among two single-port UL frequency bands and one of dual-port UL frequency bands;
the terminal switching between one single-port UL frequency band and another single-port UL frequency band;
the terminal switching between one dual-port UL frequency band and another dual-port UL frequency band; or
a first port state being in a first frequency band and a second port being in a pre-stored state of a second frequency band before switching, and at least one port state being in a third frequency band.

25. The method of claim 23, wherein the terminal is equipped with at least a first antenna and a second antenna, and the switching case comprises at least one of:
the first antenna of the terminal operating in a first frequency band, and the second antenna of the terminal operating in a second frequency band;
the first antenna of the terminal operating in a first frequency band, and the second antenna of the terminal operating in a third frequency band;
the first antenna of the terminal operating in a first frequency band, and the second antenna of the terminal operating in a fourth frequency band;
the first antenna of the terminal operating in a second frequency band, and the second antenna of the terminal operating in a third frequency band;
the first antenna of the terminal operating in a second frequency band, and the second antenna of the terminal operating in a fourth frequency band;
the first antenna of the terminal operating in a third frequency band, and the second antenna of the terminal operating in a fourth frequency band;
both the first antenna and the second antenna of the terminal operating in a first frequency band;
both the first antenna and the second antenna of the terminal operating in a second frequency band;
both the first antenna and the second antenna of the terminal operating in a third frequency band; or
both the first antenna and the second antenna of the terminal operating in a fourth frequency band.

26. The method of claim 23, wherein the switching pattern of the terminal involving more than two frequency bands comprises at least one of:
the terminal supporting three frequency bands, and the switching occurring among the three frequency bands;
the terminal supporting four frequency bands, the network device configuring three of the four frequency bands, and the switching occurring among the three frequency bands; or
the terminal supporting four frequency bands, and the switching occurring among the four frequency bands.

27. The method of claim 24, wherein the first port state being in the first frequency band means that the terminal is capable to send data via a first port in the first frequency band in a state before the switching.

28. The method of claim 24, wherein the second port being in the pre-stored state of the second frequency band means that the terminal does not send data via the second port in a state before the switching.

29. The method of claim 16, further comprising:
sending indication information to the terminal, wherein the indication information indicates the preparation time required by the terminal for the UL antenna switching.

30. The method of claim 29, wherein sending the indication information to the terminal comprises at least one of:
sending semi-static signaling to the terminal;
sending a media access control control element (MAC CE) to the terminal; or
sending downlink control information (DCI) to the terminal.

31. A communication device, comprising:
a processing module, configured to determine preparation time required by the terminal for uplink (UL) antenna switching, wherein the preparation time comprises first time for preparation and/or second time for antenna switching.

32. A communication device, comprising:
a processing module, configured to determine preparation time required by the terminal for uplink (UL) antenna switching, wherein the preparation time comprises first time for preparation and/or second time for antenna switching.

33. A communication device, comprising: a processor and a memory for storing a computer program, wherein when the computer program stored in the memory is executed by the processor, the communication device is caused to implement the method of any one of claims 1 to 15 or claims 16 to 30.

34. A communication device, comprising: a processor and an interface circuit; wherein
the interface circuit is configured to receive code instructions and transmit the code instructions to the processor; and
the processor is configured to run the code instructions to implement the method of any one of claims 1 to 15 or claims 16 to 30.

35. A computer readable storage medium for storing instructions, wherein when the instructions are executed, the method of any one of claims 1 to 15 or claims 16 to 30 is implemented.
